# EUROPEAN PATENT SPECIFICATION

(11) **EP 2 857 080 B1**
(45) Date of publication and mention of the grant of the patent: **11.03.2020**
(21) Application number: 13794124.1
(22) Date of filing: 17.05.2013
(51) Int. Cl.: B01D 29/085, B01D 29/66, B01D 29/01

(54) **RAPID SUCTION-BASED FILTERING DEVICE**
FILTERUNGSVORRICHTUNG MIT SCHNELLER ABSAUGUNG
DISPOSITIF DE FILTRATION À BASE D'ASPIRATION RAPIDE

(30) Priority: 23.05.2012 CN 201210162869
(43) Date of publication of application: 08.04.2015
(73) Proprietor: Song, Yong, Shanghai 200240 (CN)
(72) Inventor: Song, Yong, Shanghai 200240 (CN)
(74) Representative: Romano, Giuseppe
(86) International application number: PCT/CN2013/075842
(87) International publication number: WO 2013/174242

(56) References cited:
- EP-A1- 2 191 886
- CN-A- 1 090 215
- CN-A- 101 391 819
- CN-A- 102 657 966
- CN-U- 201 482 280
- CN-U- 202 569 723
- US-A1- 2011 072 792

## Description

### Field of Technology

The present invention relates to the technical field of filtration, especially to the technical field of suction filtration apparatuses, in particular to a rapid suction filtration apparatus.

### Description of Related Arts

Currently, a known suction filtration apparatus carries out a vacuum suction filtration by using a vacuum pump. Wherein the air suction end of the vacuum pump is connected to the suction filtration end of a filter, so as to complete the suction filtration by utilizing a reduced pressure generated by the vacuum pump. However, in this process, the filter is easily clogged up, affecting the efficiency and the speed of the suction filtration.

Therefore, there is a need to provide a rapid suction filtration apparatus, in its suction filtration process, the filter is not easily clogged up, thereby increasing the efficiency and the speed of the suction filtration. EP 2191886 A1 discloses a filtration apparatus according to the preamble of claim 1.

### Summary of the Invention

Aspects of the present invention generally pertain to a rapid suction filtration apparatus, which is designed skillfully and has a concise structure, and in its suction filtration process, the filter is not easily clogged up, thereby increasing the efficiency and the speed of the suction filtration, therefore the present invention is suitable for large-scale popularization.

In order to realize the above aims, in a first aspect of the present invention, a rapid suction filtration apparatus is provided, and comprises a filter and a vacuum pump, the suction filtration end of the filter is pneumatically connected to the air suction end of the vacuum pump, the suction filtration end is further pneumatically connected to the air exhaust end of the vacuum pump.

In a further aspect, the rapid suction filtration apparatus further comprises a change valve, the suction filtration end is pneumatically connected to the air suction end and the air exhaust end respectively through the change valve.

In yet another aspect, the change valve is an electromagnetic change valve, and the rapid suction filtration apparatus further comprises a controller which is electrically connected to the vacuum pump and the electromagnetic change valve respectively.

In a further aspect, the rapid suction filtration apparatus further comprises an air filter, and the air exhaust end is pneumatically connected to the suction filtration end through the air filter.

In a further aspect, the rapid suction filtration apparatus further comprises a four-way connection and three stop valves, and there are three filters, their suction filtration ends are pneumatically connected to the four-way connection through the stop valves respectively, the four-way connection is pneumatically connected to the air suction end and the air exhaust end respectively.

In a further aspect, the stop valves are manual stop valves.

In a further aspect, the filter is a suction flask.

In a further aspect, the rapid suction filtration apparatus further comprises a first control valve and a second control valve, the suction filtration end is pneumatically connected to the air suction end and the air exhaust end through the first control valve and the second control valve respectively.

In yet another aspect, the rapid suction filtration apparatus further comprises a three-way connection, the suction filtration end is pneumatically connected to the first control valve and the second control valve respectively through the three-way connection.

In a further aspect, the rapid suction filtration apparatus further comprises a third control valve, a fourth control valve, a fifth control valve and a sixth control valve, the suction filtration end is pneumatically connected to the air suction end and the air exhaust end through the fourth control valve and the fifth control valve respectively, the air suction end is further pneumatically connected to the third control valve, the air exhaust end is further pneumatically connected to the sixth control valve.

The advantages of the present invention are as follows:
1. The rapid suction filtration apparatus of the present invention comprises a filter and a vacuum pump, the suction filtration end of the filter is pneumatically connected to the air suction end of the vacuum pump, the suction filtration end is further pneumatically connected to the air exhaust end of the vacuum pump, therefore, in the suction filtration process, a negative pressure and a positive pressure are applied to the filter alternately by making the air suction end and the air exhaust end of the vacuum pump work alternately, to prevent small solid particles from clogging up the filter, so as to increasing the efficiency and the speed of the suction filtration, thus the present invention is designed skillfully and has a concise structure, and in its suction filtration process, the filter is not easily clogged up, thereby increasing the efficiency and the speed of the suction filtration, therefore the present invention is suitable for large-scale popularization.
2. The rapid suction filtration apparatus of the present invention further comprises a change valve, the suction filtration end is pneumatically connected to the air suction end and the air exhaust end respectively through the change valve, therefore it is achieved through the change valve that the air suction end and the air exhaust end of the vacuum pump are in air communication with the suction filtration end of the filter alternately, thus the present invention is designed skillfully and has a concise structure, and in its suction filtration process, the filter is not easily clogged up, thereby increasing the efficiency and the speed of the suction filtration, therefore the present invention is suitable for large-scale popularization.
3. The rapid suction filtration apparatus of the present invention further comprises a first control valve and a second control valve, the suction filtration end is pneumatically connected to the air suction end and the air exhaust end through the first control valve and the second control valve respectively, therefore it is achieved through the first control valve and the second control valve that the air suction end and the air exhaust end of the vacuum pump are in air communication with the suction filtration end of the filter alternately, thus the present invention is designed skillfully and has a concise structure, and in its suction filtration process, the filter is not easily clogged up, thereby increasing the efficiency and the speed of the suction filtration, therefore the present invention is suitable for large-scale popularization.
4. The rapid suction filtration apparatus of the present invention further comprises a third control valve, a fourth control valve, a fifth control valve and a sixth control valve, the suction filtration end is pneumatically connected to the air suction end and the air exhaust end through the fourth control valve and the fifth control valve respectively, the air suction end is further pneumatically connected to the third control valve, the air exhaust end is further pneumatically connected to the sixth control valve, therefore it is achieved through the fourth control valve and the fifth control valve that the air suction end and the air exhaust end of the vacuum pump are in air communication with the suction filtration end of the filter alternately, thus the present invention is designed skillfully and has a concise structure, and in its suction filtration process, the filter is not easily clogged up, thereby increasing the efficiency and the speed of the suction filtration, therefore the present invention is suitable for large-scale popularization.

### Brief Description of the Drawings

Fig. 1 is a schematic view of a first usage state of an embodiment of the present invention.
Fig. 2 is a schematic view of a second usage state of the embodiment shown in Fig. 1.
Fig. 3 is a schematic view of a first usage state of another embodiment of the present invention.
Fig. 4 is a schematic view of a second usage state of the embodiment shown in Fig. 3.
Fig. 5 is a schematic view of a first usage state of another embodiment of the present invention.
Fig. 6 is a schematic view of a second usage state of the embodiment shown in Fig. 5.

### Detailed Description of the Preferred Embodiment

In order to understand the technical content of the present invention clearly, the present invention is further exemplified by reference to the following examples. Wherein the same components adopt the same reference signs.

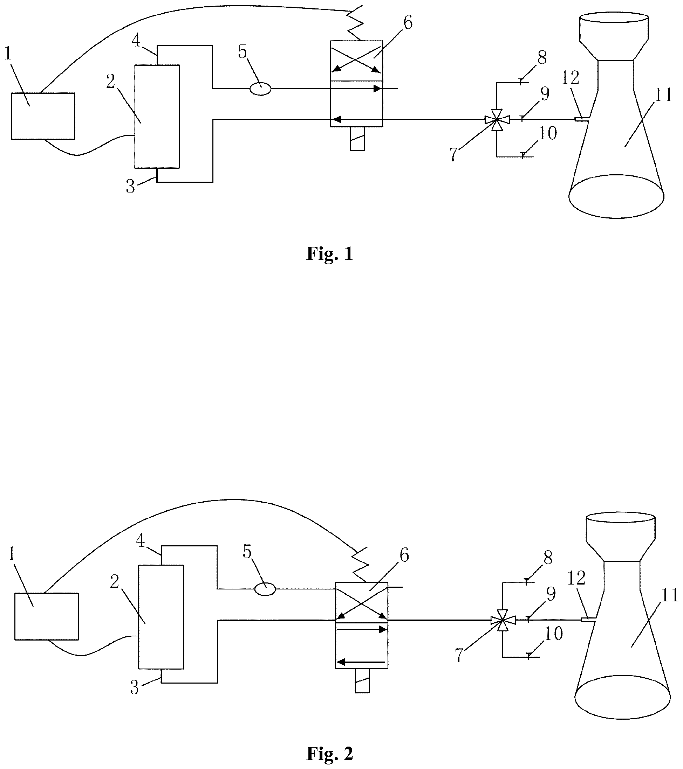

Please refer to Fig. 1-Fig. 2, the rapid suction filtration apparatus of the present invention comprises a filter 11 and a vacuum pump 2, the suction filtration end 12 of the filter 11 is pneumatically connected to the air suction end 3 of the vacuum pump 2, the suction filtration end 12 is further pneumatically connected to the air exhaust end 4 of the vacuum pump 2. When it is used, the suction filtration end 12 is in air communication with the air suction end 3 and the air exhaust end 4 alternately.

In order to achieve that the suction filtration end 12 is in air communication with the air suction end 3 and the air exhaust end 4 alternately, please refer to Fig. 1-2, in one embodiment of the present invention, the rapid suction filtration apparatus further comprises a change valve 6, the suction filtration end 12 is pneumatically connected to the air suction end 3 and the air exhaust end 4 respectively through the change valve 6. Of course, the air suction end 3 and the air exhaust end 4 can be pneumatically connected to the suction filtration end 12 through their respective control valves respectively.

The change valve 6 may be operated manually or electrically, please refer to Fig. 1- Fig. 2, in one embodiment of the present invention, the change valve 6 is an electromagnetic change valve, and the rapid suction filtration apparatus further comprises a controller 1 which is electrically connected to the vacuum pump 2 and the electromagnetic change valve respectively.

In order to protect the filter 11, preferably, the rapid suction filtration apparatus further comprises an air filter 5, and the air exhaust end 4 is pneumatically connected to the suction filtration end 12 through the air filter 5. Please refer to Fig. 1-Fig. 2, in one embodiment of the present invention, the air filter 5 is pneumatically connected to the suction filtration end 12 through the electromagnetic change valve.

In order to make the vacuum pump 2 be connected to a plurality of the filters 11, preferably, the rapid suction filtration apparatus further comprises a four-way connection 7 and three stop valves 8, 9, and 10, and there are three filters 11 (only one filter 11 is shown in Fig. 1-Fig. 2), their suction filtration ends 12 are pneumatically connected to the four-way connection 7 through the stop valves 8, 9, and 10 respectively, the four-way connection 7 is pneumatically connected to the air suction end 3 and the air exhaust end 4 respectively. Please refer to Fig. 1-Fig. 2, in one embodiment of the present invention, the four-way connection 7 is pneumatically connected to the air suction end 3 through the electromagnetic change valve, the four-way connection 7 is pneumatically connected to the air exhaust end 4 through the electromagnetic change valve and the air filter 5.

The stop valves 8, 9, and 10 may be operated manually or electrically, if they are operated electrically, they can be electrically connected to the controller 1. Please refer to Fig. 1-Fig. 2, in one embodiment of the present invention, the stop valves 8, 9, and 10 are manual stop valves.

The filter 11 may be any suitable component, please refer to Fig. 1-Fig. 2, in one embodiment of the present invention, the filter is a suction flask.

When the present invention is used, please refer to Fig. 1, the electromagnetic change valve is controlled by the controller 1 to make the air suction end 3 of the vacuum pump 2 be in air communication with the suction filtration end 12 of the filter 11, to cause the negative pressure generated by the vacuum pump 2 to be applied to the suction filtration end 12 of the filter 11, so as to achieve the suction filtration. Please refer to Fig. 2, the electromagnetic change valve is controlled by the controller 1 to make the air exhaust end 4 of the vacuum pump 2 be in air communication with the suction filtration end 12 of the filter 11, to cause the positive pressure generated by the vacuum pump 2 to be applied to the suction filtration end 12 of the filter 11, so as to prevent small solid particles from clogging up the filter 11. The above steps are repeated until the suction filtration ends.

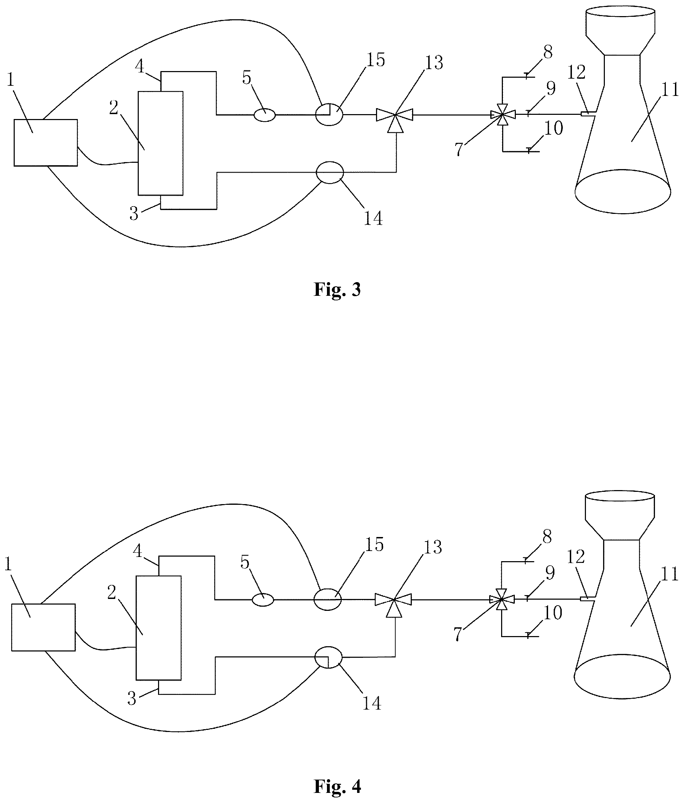

Please refer to Fig. 3-Fig. 4, and Fig. 3-Fig. 4 show another embodiment of the present invention, the difference from the embodiment shown in Fig. 1-Fig. 2 is that the function of the change valve 6 is achieved by a first control valve 14 and a second control valve 15, that is to say, the suction filtration end 12 is pneumatically connected to the air suction end 3 and the air exhaust end 4 through the first control valve 14 and the second control valve 15 respectively. The first control valve 14 and the second control valve 15 may be three-way solenoid valves.

Any suitable structure can be adopted to achieve that the suction filtration end 12 is pneumatically connected to the first control valve 14 and the second control valve 15 respectively, please refer to Fig. 3-Fig. 4, in another embodiment of the present invention, the rapid suction filtration apparatus further comprises a three-way connection 13, the suction filtration end 12 is pneumatically connected to the first control valve 14 and the second control valve 15 respectively through the three-way connection 13.

When the present invention is used, please refer to Fig. 3, the first control valve 14 and the second control valve 15 are controlled by the controller 1 to make the air suction end 3 of the vacuum pump 2 be in air communication with the suction filtration end 12 of the filter 11, to cause the negative pressure generated by the vacuum pump 2 to be applied to the suction filtration end 12 of the filter 11, so as to achieve the suction filtration. Please refer to Fig. 4, the first control valve 14 and the second control valve 15 are controlled by the controller 1 to make the air exhaust end 4 of the vacuum pump 2 be in air communication with the suction filtration end 12 of the filter 11, to cause the positive pressure generated by the vacuum pump 2 to be applied to the suction filtration end 12 of the filter 11, so as to prevent small solid particles from clogging up the filter 11. The above steps are repeated until the suction filtration ends.

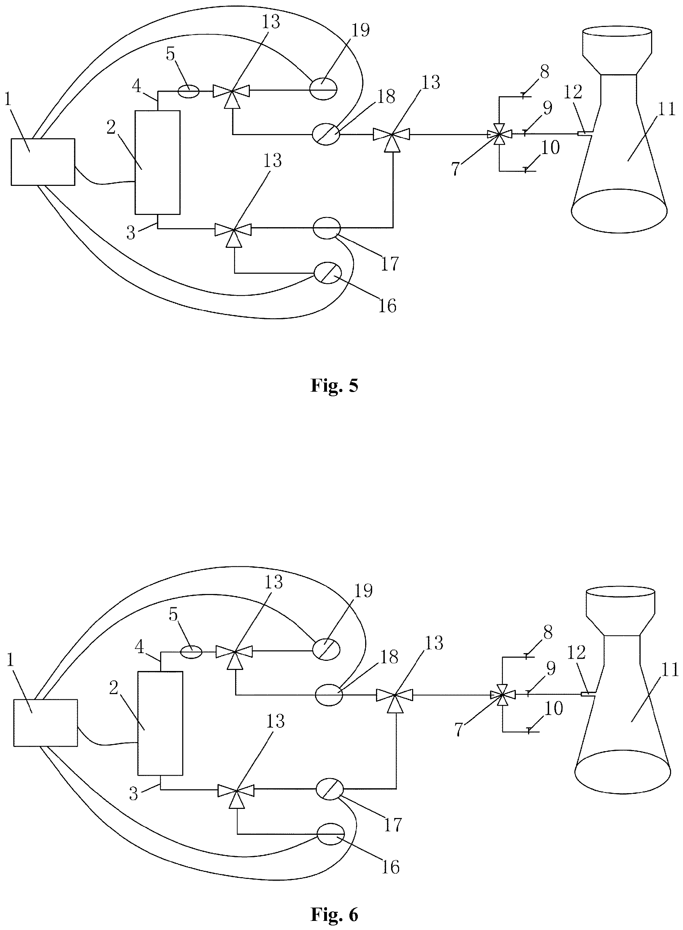

Please refer to Fig. 5-Fig. 6, and Fig. 5-Fig. 6 show another embodiment of the present invention, the difference from the embodiment shown in Fig. 1-2 is that the function of the change valve 6 is achieved by a third control valve 16, a fourth control valve 17, a fifth control valve 18 and a sixth control valve 19, that is to say, the suction filtration end 12 is pneumatically connected to the air suction end 3 and the air exhaust end 4 through the fourth control valve 17 and the fifth control valve 18 respectively, the air suction end 3 is further pneumatically connected to the third control valve 16, the air exhaust end 4 is further pneumatically connected to the sixth control valve 19. The third control valve 16, the fourth control valve 17, the fifth control valve 18 and the sixth control valve 19 may be two-way solenoid valves.

Any suitable structure can be adopted to achieve that the suction filtration end 12 is pneumatically connected to the fourth control valve 17 and the fifth control valve 18 respectively, any suitable structure can be adopted to achieve that the air suction end 3 is pneumatically connected to the third control valve 16 and the fourth control valve 17 respectively, any suitable structure can be adopted to achieve that the air exhaust end 4 is pneumatically connected to the fifth control valve 18 and the sixth control valve 19 respectively, please refer to Fig. 5-Fig. 6, in another embodiment of the present invention, the rapid suction filtration apparatus further comprises three three-way connections 13, the suction filtration end 12 is pneumatically connected to the fourth control valve 17 and the fifth control valve 18 respectively through one of the three-way connections 13; the air suction end 3 is pneumatically connected to the third control valve 16 and the fourth control valve 17 respectively through another one of the three-way connections 13; the air exhaust end 4 is pneumatically connected to the fifth control valve 18 and the sixth control valve 19 respectively through the last one of the three-way connections 13.

When the present invention is used, please refer to Fig. 5, the fourth control valve 17 and the sixth control valve 19 are controlled by the controller 1 to open, the third control valve 16 and the fifth control valve 18 are controlled by the controller 1 to close, to make the air suction end 3 of the vacuum pump 2 be in air communication with the suction filtration end 12 of the filter 11, to cause the negative pressure generated by the vacuum pump 2 to be applied to the suction filtration end 12 of the filter 11, so as to achieve the suction filtration. Please refer to Fig. 6, the third control valve 16 and the fifth control valve 18 are controlled by the controller 1 to open, the fourth control valve 17 and the sixth control valve 19 are controlled by the controller 1 to close, to make the air exhaust end 4 of the vacuum pump 2 be in air communication with the suction filtration end 12 of the filter 11, to cause the positive pressure generated by the vacuum pump 2 to be applied to the suction filtration end 12 of the filter 11, so as to prevent small solid particles from clogging up the filter 11. The above steps are repeated until the suction filtration ends.

Therefore, the present invention relates to a rapid suction filtration apparatus, in its suction filtration process, at first the suction filtration is carried out by utilizing the negative pressure provided by the air suction end 3 of the vacuum pump 2, then the filter 11 is blown back by utilizing the positive pressure provided by the air exhaust end 4 of the vacuum pump 2, so as to prevent small solid particles from clogging up the filter 11, then the above steps are repeated until the suction filtration ends. That is to say, the negative pressure and the positive pressure are applied alternatively to the filter 11, to prevent small solid particles from clogging up the filter 11, thereby increasing the efficiency and the speed of the suction filtration. The present invention is suitable for laboratories, factories or the like to filter liquids, so as to detect or remove solids or bacteria in the liquids.

To sum up, the rapid suction filtration apparatus of the present invention is designed skillfully and has a concise structure, and in its suction filtration process, the filter is not easily clogged up, thereby increasing the efficiency and the speed of the suction filtration, therefore the present invention is suitable for large-scale popularization.

## Claims

1. A rapid suction filtration apparatus comprising a filter (11) and a vacuum pump (2), the suction filtration end (12) of the filter (11) being pneumatically connected through one or more valves (6; 14, 15; 16, 17, 18, 19) to the air suction end (3) and to the air exhaust end (4) of the vacuum pump (2), **characterized in that** the rapid suction filtration apparatus further comprises a controller (1) suitable to control said one or more valves (6; 14, 15; 16, 17, 18, 19) for alternately connecting said air suction end (3) and said air exhaust end (4) to said suction filtration end (12), so that negative pressure and positive pressure are alternatively applied to the filter (11).

2. The rapid suction filtration apparatus according to claim 1, **characterized in that** said one or more valves (6; 14, 15; 16, 17, 18, 19) comprise a change valve (6).

3. The rapid suction filtration apparatus according to claim 2, **characterized in that** the change valve (6) is an electromagnetic change valve and the controller (1) is electrically connected to the vacuum pump (2) and the electromagnetic change valve (6), respectively.

4. The rapid suction filtration apparatus according to claim 1, **characterized in that** the rapid suction filtration apparatus further comprises an air filter (5) and the air exhaust end (4) is pneumatically connected to the suction filtration end (12) through the air filter (5).

5. The rapid suction filtration apparatus according to claim 1, **characterized in that** the rapid suction filtration apparatus further comprises a four-way connection (7) and three stop valves (8, 9, 10), wherein the suction filtration ends (12) of three filters (11) are pneumatically connected to the four-way connection (7) through the stop valves (8, 9, 10), respectively, and the four-way connection (7) is pneumatically connected to the air suction end (3) and the air exhaust end (4), respectively.

6. The rapid suction filtration apparatus according to claim 5, **characterized in that** the stop valves (8, 9, 10) are manual stop valves.

7. The rapid suction filtration apparatus according to claim 1, **characterized in that** the filter (11) is a suction flask.

8. The rapid suction filtration apparatus according to claim 1, **characterized in that** said one or more valves (6; 14, 15; 16, 17, 18, 19) comprise a first control valve (14) and a second control valve (15), the suction filtration end (12) being pneumatically connected to the air suction end (3) and the air exhaust end (4) through the first control valve (14) and the second control valve (15), respectively.

9. The rapid suction filtration apparatus according to claim 8, **characterized in that** the rapid suction filtration apparatus further comprises a three-way connection (13), wherein the suction filtration end (12) is pneumatically connected to the first control valve (14) and the second control valve (15), respectively, through the three-way connection (13).

10. The rapid suction filtration apparatus according to claim 1, **characterized in that** the rapid suction filtration apparatus further comprises a third control valve (16), a fourth control valve (17), a fifth control valve (18) and a sixth control valve (19), wherein the suction filtration end (12) is pneumatically connected to the air suction end (3) and the air exhaust end (4) through the fourth control valve (17) and the fifth control valve (18), respectively, and wherein the air suction end (3) is further pneumatically connected to the third control valve (16) and the air exhaust end (4) is further pneumatically connected to the sixth control valve (19).

## Patentansprüche

1. Eine Filtervorrichtung mit schneller Absaugung, umfassend einen Filter (11) und eine Vakuumpumpe (2), wobei das saugseitige Filterende (12) über ein oder mehrere Ventile (6; 14, 15; 16, 17, 18, 19) an der Luftansaugseite (3) und an der Luftauslassseite (4) der Vakuumpumpe (2) pneumatisch angeschlossen ist, **dadurch gekennzeichnet, dass** die Filtervorrichtung mit schneller Absaugung ferner eine Steuerung (1) umfasst, welche dazu ausgelegt ist, die besagten ein oder mehreren Ventile (6; 14, 15; 16, 17, 18, 19) derart zu steuern, um wechselweise die besagte Luftansaugseite (3) und die besagte Luftauslassseite (4) an dem saugseitigen Filterende (12) anzuschließen, so dass an dem Filter (11) wechselweise negativer Druck und positiver Druck anliegt.

2. Die Filtervorrichtung mit schneller Absaugung gemäß Anspruch 1, **dadurch gekennzeichnet, dass** die besagten ein oder mehreren Ventile (6; 14, 15; 16, 17, 18, 19) ein Wegänderungsventil (6) umfassen.

3. Die Filtervorrichtung mit schneller Absaugung gemäß Anspruch 2, **dadurch gekennzeichnet, dass** das Wegänderungsventil (6) ein elektromagnetisches Wegänderungsventil ist und die Steuerung (1) an der Vakuumpumpe (2) bzw. an dem elektromagnetischen Wegänderungsventil (6) elektrisch angeschlossen ist.

4. Die Filtervorrichtung mit schneller Absaugung gemäß Anspruch 1, **dadurch gekennzeichnet, dass** die Filtervorrichtung mit schneller Absaugung ferner einen Luftfilter (5) umfasst und die Luftauslassseite (4) über den Luftfilter (5) an dem saugseitigen Filterende (12) pneumatisch angeschlossen ist.

5. Die Filtervorrichtung mit schneller Absaugung gemäß Anspruch 1, **dadurch gekennzeichnet, dass** die Filtervorrichtung mit schneller Absaugung ferner eine Vier-Wege-Verbindung (7) sowie drei Absperrventile (8, 9, 10) umfasst, wobei die saugseitigen Filterenden (12) dreier Filter (11) über je ein Absperrventil (8, 9, 10) an der Vier-Wege-Verbindung (7) pneumatisch angeschlossen sind, und wobei die Vier-Wege-Verbindung (7) an der Luftansaugseite (3) bzw. an der Luftauslassseite (4) pneumatisch angeschlossen ist.

6. Die Filtervorrichtung mit schneller Absaugung gemäß Anspruch 5, **dadurch gekennzeichnet, dass** die Absperrventile (8, 9, 10) manuelle Absperrventile sind.

7. Die Filtervorrichtung mit schneller Absaugung gemäß Anspruch 1, **dadurch gekennzeichnet, dass** der Filter (11) eine Saugflasche ist.

8. Die Filtervorrichtung mit schneller Absaugung gemäß Anspruch 1, **dadurch gekennzeichnet, dass** die besagten ein oder mehreren Ventile (6; 14, 15; 16, 17, 18, 19) ein erstes Steuerventil (14) und ein zweites Steuerventil (15) umfassen, wobei das saugseitige Filterende (12) über das erste Steuerventil (14) bzw. über das zweite Steuerventil (15) an der Luftansaugseite (3) und an der Luftauslassseite (4) pneumatisch angeschlossen ist.

9. Die Filtervorrichtung mit schneller Absaugung gemäß Anspruch 8, **dadurch gekennzeichnet, dass** die Filtervorrichtung mit schneller Absaugung ferner eine Drei-Wege-Verbindung (13) umfasst, wobei das saugseitige Filterende (12) über die Drei-Wege-Verbindung (13) mit dem ersten Steuerventil (14) bzw. mit dem zweiten Steuerventil (15) pneumatisch verbunden ist.

10. Die Filtervorrichtung mit schneller Absaugung gemäß Anspruch 1, **dadurch gekennzeichnet, dass** die Filtervorrichtung mit schneller Absaugung ferner ein drittes Steuerventil (16), ein viertes Steuerventil (17), ein fünftes Steuerventil (18) und ein sechstes Steuerventil (19) umfasst, wobei das saugseitige Filterende (12) an der Luftansaugseite (3) und an der Luftauslassseite (4) über das vierte Steuerventil (17) bzw. über das fünfte Steuerventil (18) pneumatisch angeschlossen ist, und wobei die Luftansaugseite (3) ferner an dem dritten Steuerventil (16) pneumatisch angeschlossen ist, und die Luftauslassseite (4) ferner an dem sechsten Steuerventil (19) pneumatisch angeschlossen ist.

## Revendications

1. Appareil de filtration par aspiration rapide comprenant un filtre (11) et une pompe à vide (2), l'extrémité de filtration par aspiration (12) du filtre (11) étant raccordée de manière pneumatique à travers une ou plusieurs vannes (6 ; 14, 15 ; 16, 17, 18, 19) à l'extrémité d'aspiration d'air (3) et à l'extrémité d'évacuation d'air (4) de la pompe à vide (2), **caractérisé en ce que** l'appareil de filtration par aspiration rapide comprend en outre un contrôleur (1) approprié pour commander lesdites une ou plusieurs vannes (6 ; 14, 15 ; 16, 17, 18, 19) pour raccorder de manière alternée ladite extrémité d'aspiration d'air (3) et ladite extrémité d'évacuation d'air (4) à ladite extrémité de filtration par aspiration (12), de sorte qu'une pression négative et une pression positive sont appliquées en alternance au filtre (11).

2. Appareil de filtration par aspiration rapide selon la revendication 1, **caractérisé en ce que** lesdites une ou plusieurs vannes (6 ; 14, 15 ; 16, 17, 18, 19) comprennent une vanne de commutation (6).

3. Appareil de filtration par aspiration rapide selon la revendication 2, **caractérisé en ce que** la vanne de commutation (6) est une vanne de commutation électromagnétique et le contrôleur (1) est électriquement connecté à la pompe à vide (2) et à la vanne de commutation électromagnétique (6), respectivement.

4. Appareil de filtration par aspiration rapide selon la revendication 1, **caractérisé en ce que** l'appareil de filtration par aspiration rapide comprend en outre un filtre à air (5) et l'extrémité d'évacuation d'air (4) est raccordée de manière pneumatique à l'extrémité de filtration par aspiration (12) à travers le filtre à air (5).

5. Appareil de filtration par aspiration rapide selon la revendication 1, **caractérisé en ce que** l'appareil de filtration par aspiration rapide comprend en outre un raccord à quatre voies (7) et trois vannes de coupure (8, 9, 10), dans lequel les extrémités de filtration par aspiration (12) de trois filtres (11) sont raccordées de manière pneumatique au raccord à quatre voies (7) à travers les vannes de coupure (8, 9, 10), respectivement, et le raccord à quatre voies (7) est raccordé de manière pneumatique à l'extrémité d'aspiration d'air (3) et à l'extrémité d'évacuation d'air (4), respectivement.

6. Appareil de filtration par aspiration rapide selon la revendication 5, **caractérisé en ce que** les vannes de coupure (8, 9, 10) sont des vannes d'arrêt manuelles.

7. Appareil de filtration par aspiration rapide selon la revendication 1, **caractérisé en ce que** le filtre (11) est un ballon à aspiration.

8. Appareil de filtration par aspiration rapide selon la revendication 1, **caractérisé en ce que** lesdites une ou plusieurs vannes (6 ; 14, 15 ; 16, 17, 18, 19) comprennent une première vanne de commande (14) et une deuxième vanne de commande (15), l'extrémité de filtration d'aspiration (12) étant raccordée de manière pneumatique à l'extrémité d'aspiration d'air (3) et à l'extrémité d'évacuation d'air (4) à travers la première vanne de commande (14) et la deuxième vanne de commande (15), respectivement.

9. Appareil de filtration par aspiration rapide selon la revendication 8, **caractérisé en ce que** l'appareil de filtration par aspiration rapide comprend en outre un raccord à trois voies (13), dans lequel l'extrémité de filtration par aspiration (12) est raccordée de manière pneumatique à la première vanne de commande (14) et à la deuxième vanne de commande (15), respectivement, à travers le raccord à trois voies (13).

10. Appareil de filtration par aspiration rapide selon la revendication 1, **caractérisé en ce que** l'appareil de filtration par aspiration rapide comprend en outre une troisième vanne de commande (16), une quatrième vanne de commande (17), une cinquième vanne de commande (18) et une sixième vanne de commande (19), dans lequel l'extrémité de filtration d'aspiration (12) est raccordée de manière pneumatique à l'extrémité d'aspiration d'air (3) et à l'extrémité d'évacuation d'air (4) à travers la quatrième vanne de commande (17) et la cinquième vanne de commande (18), respectivement, et dans lequel l'extrémité d'aspiration d'air (3) est en outre raccordée de manière pneumatique à la troisième vanne de commande (16) et l'extrémité d'évacuation d'air (4) est en outre raccordée de manière pneumatique à la sixième vanne de commande (19).
